# EUROPEAN PATENT APPLICATION

(11) **EP 4 361 093 A1**
(43) Date of publication of application: **01.05.2024**
(21) Application number: 22861058.0
(22) Date of filing: 29.07.2022
(51) Int. Cl.: C01B 3/00, C01B 3/38, C01C 1/04

(54) **HYDROGEN PRODUCTION SYSTEM**

(30) Priority: 24.08.2021 JP 2021136405
(71) Applicant: Mitsubishi Heavy Industries, Ltd., Tokyo 100-8332 (JP)
(72) Inventor: ITO, Hideki, Tokyo 100-8332 (JP); SETO, Shuntaro, Tokyo 100-8332 (JP); TOYODA, Ichirou, Tokyo 100-8332 (JP)
(74) Representative: Studio Torta S.p.A.
(86) International application number: PCT/JP2022/029250
(87) International publication number: WO 2023/026767

(57) **Abstract**

A hydrogen production system comprising hydrogen compound members, a first container, a second container having an internal temperature that is lower than the internal temperature of the first container, and a water supplying device that supplies water to the second container, said system being configured such that the hydrogen compound member contained in the first container can be moved into the second container, and the hydrogen compound member contained in the second container can be moved into the first container.

## Description

### Technical Field

The present disclosure relates to a hydrogen production system.

The present application claims priority based on Japanese Patent Application No. 2021-136405 filed in Japan on August 24, 2021, the contents of which are incorporated herein by reference.

### Background Art

PTL 1 discloses a two-dimensional boron hydride sheet which releases hydrogen by heating to 150°C to 200°C. Since hydrogen is highly reactive and explosive, PTL 1 discloses that hydrogen is generated by irradiating the two-dimensional boron hydride sheet with light as a method capable of easily generating hydrogen even at room temperature.

### Citation List

### Patent Literature

[PTL 1] Japanese Unexamined Patent Application Publication No. 2019-218251

### Summary of Invention

### Technical Problem

In order to properly collect hydrogen released from a two-dimensional boron hydride sheet in either heating or irradiation with light, it is necessary to release hydrogen from the two-dimensional boron hydride sheet accommodated in an airtight container to cause the released hydrogen to flow out from the container. In this case, when releasing hydrogen by heating, since the container is also heated together as well as the two-dimensional boron hydride sheet, an extra amount of heat corresponding to heat capacity of the container is required when heating, and therefore, there were problems that thermal efficiency and cost for producing hydrogen were decreased.

In view of the above circumstances, an object of at least one embodiment of the present disclosure is to provide a hydrogen production system capable of reducing production cost of hydrogen.

### Solution to Problem

In order to achieve the above object, a hydrogen production system according to the present disclosure includes a hydrogen compound member, a first container, a second container having an internal temperature which is lower than an internal temperature of the first container, and a water supply device which supplies water into the second container, and the hydrogen compound member accommodated in the first container is movable into the second container, and the hydrogen compound member accommodated in the second container is movable into the first container.

### Advantageous Effects of Invention

According to the hydrogen production system of the present disclosure, after hydrogen is released from the hydrogen compound member into the first container having a high temperature, it is possible to move the hydrogen compound member into the second container having a low temperature, cause the hydrogen compound member to store hydrogen, and move the hydrogen compound member storing the hydrogen into the first container again. By such an operation, only a temperature of the hydrogen compound member needs to be raised or lowered, and temperature changes of the first container and the second container accommodating the hydrogen compound member can be suppressed as much as possible. Accordingly, it is possible to improve thermal efficiency, and as a result, it is possible to reduce production cost of hydrogen.

### Brief Description of Drawings

Fig. 1 is a schematic configuration diagram of a hydrogen production system according to Embodiment 1 of the present disclosure.
Fig. 2 is a schematic configuration diagram of an ammonia production system including a heat generation source in a hydrogen production system according to Embodiment 1 of the present disclosure.
Fig. 3 is a schematic configuration diagram of a power generation system including a heat generation source in a hydrogen production system according to Embodiment 1 of the present disclosure.
Fig. 4 is a schematic configuration diagram of a power generation system including a heat generation source in a fuel cell system according to Embodiment 1 of the present disclosure.
Fig. 5 is a schematic configuration diagram of an iron production system including a heat generation source in a fuel cell system according to Embodiment 1 of the present disclosure.
Fig. 6 is a schematic configuration diagram of a sunlight focusing device as a heat generation source in a fuel cell system according to Embodiment 1 of the present disclosure.
Fig. 7 is a schematic configuration diagram of a hydrogen production system according to Embodiment 1 of the present disclosure.
Fig. 8 is a schematic configuration diagram of a first container, a second container, a third container, and a fourth container of a hydrogen production system according to Embodiment 1 of the present disclosure.
Fig. 9 is a cross-sectional view of a cartridge provided in a hydrogen production system according to Embodiment 1 of the present disclosure.

### Description of Embodiments

Hereinafter, a hydrogen production system according to an embodiment of the present disclosure will be described with reference to the drawings. The embodiment described below shows one aspect of the present disclosure and is not to limit the present disclosure, and any change can be made within the scope of the technical idea of the present disclosure.

### (Embodiment 1)

### <Configuration of hydrogen production system according to Embodiment 1 of present disclosure>

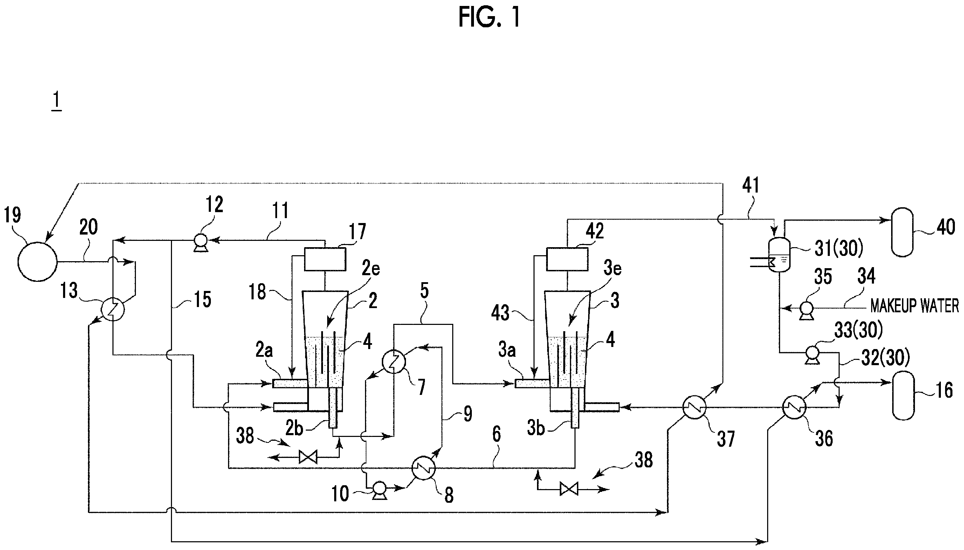

As shown in Fig. 1, a hydrogen production system 1 according to Embodiment 1 of the present disclosure includes a first container 2 and a second container 3. The first container 2 and the second container 3 are configured to accommodate a hydrogen compound member 4. An inside of any or both of the first container 2 and the second container 3 may be configured to have a labyrinth structure 2e or 3e so that a movement path of the hydrogen compound member 4 in the inside of the first container 2 and the second container 3 becomes long, for example, as the hydrogen compound member 4 is movable while repeating vertical movement in the inside of the first container 2 and the second container 3.

When an element other than hydrogen (H) is defined as X, the hydrogen compound member 4 has a configuration in which a powder containing two-dimensional arrangement of a hydrogen compound represented by a chemical formula XₘHₙ is impregnated on a particulate support, for example, beads. A stoichiometric ratio m:n is 1:1 to 3:4 (for example, XH, XH₂, XH₃, XH₄, X₂H₃, or X₃H₄). Although not limited, the element X is, for example, boron (B).

The first container 2 is provided with a supply port 2a for supplying the hydrogen compound member 4 to the inside of the first container 2 and an outflow port 2b for causing the hydrogen compound member 4 accommodated in the inside of the first container 2 to flow out. The second container 3 is provided with a supply port 3a for supplying the hydrogen compound member 4 to the inside of the second container 3 and an outflow port 3b for causing the hydrogen compound member 4 accommodated in the inside of the second container 3 to flow out. A first path 5 is provided to communicate the outflow port 2b and the supply port 3a, and a second path 6 is provided to communicate the outflow port 3b and the supply port 2a.

As in an operation which will be described later, the hydrogen compound member 4 moves from the first container 2 to the second container 3 through the first path 5, and the hydrogen compound member 4 moves from the second container 3 to the first container 2 through the second path 6. Accordingly, a device for moving the hydrogen compound member 4, which is a particulate substance, is provided in each of the first path 5 and the second path 6. A configuration of such a device is not particularly limited, and for example, a powder feeder can be provided in each of the first path 5 and the second path 6 as such a device.

The first path 5 is provided with a first heat exchanger 7 for cooling the hydrogen compound member 4 moving through the first path 5. In addition, the second path 6 is provided with a second heat exchanger 8 for heating the hydrogen compound member 4 moving through the second path 6. In each of the first heat exchanger 7 and the second heat exchanger 8, a heat medium which exchanges heat with the hydrogen compound member 4 can be made common. In a configuration in which the heat medium is made common, a circulation line 9 in which the heat medium circulates between the first heat exchanger 7 and the second heat exchanger 8 is provided, and a pump 10 is provided in the circulation line 9 so that the heat medium circulates through the circulation line 9.

A gas circulation line 11 is provided on the first container 2, the gas circulation line having one end connected to a lower portion, preferably, a bottom portion of the first container 2, and the other end connected to an upper portion, preferably, a top portion of the first container 2. As in an operation which will be described later, since hydrogen is released from the hydrogen compound member 4 accommodated in the first container 2, a gas flowing through the gas circulation line 11 is a gas containing hydrogen. The gas circulation line 11 is provided with a compressor 12 for pressurizing a gas, and a third heat exchanger 13 for heating a gas circulating through the gas circulation line 11. A fluid which exchanges heat with a gas circulating through the gas circulation line 11 in the third heat exchanger 13 is a fluid which has absorbed heat generated by a heat generation source 19 or a fluid heated by heat generated by the heat generation source 19. A specific configuration of the heat generation source 19 will be described later. A heating fluid line 20 through which such a fluid flows extends from the heat generation source 19 to pass through the third heat exchanger 13.

In addition, in order to extract some of the gas circulating through the gas circulation line 11, an extraction line 15 is branched from the gas circulation line 11. A position where the extraction line 15 is branched is not particularly limited, and may be, for example, between the compressor 12 and the third heat exchanger 13. The extraction line 15 is connected to a storage tank 16 for storing the gas extracted from the gas circulation line 11 and a gas whose main component is hydrogen.

In addition, the gas circulation line 11 may be provided with a dust collection device 17 (Cyclone, a bag filter, or the like) which removes a solid component from the gas flowing out from the first container 2. In order to return the solid component removed in the dust collection device 17 to the supply port 2a, a collection line 18 for communicating the dust collection device 17 and the supply port 2a may be provided.

The hydrogen production system 1 includes a water supply device 30 which supplies water into the second container 3. The water supplied into the second container 3 by the water supply device 30 is not limited to liquid water, may be steam, or may be a fluid containing at least one of liquid water or steam. "Water" in the following description means any of these. A configuration of the water supply device 30 is not particularly limited, and in Embodiment 1, as an example, the water supply device 30 will be described as having a configuration including a water tank 31 for storing water, a supply water line 32 having one end connected to the water tank 31 and the other end connected to the second container 3, and a water supply pump 33 provided on the supply water line 32. In this configuration, the other end of the supply water line 32 is preferably connected to the second container 3 on a lower side than the hydrogen compound member 4 accommodated in the second container 3, that is, water is supplied to a lower side than the hydrogen compound member 4 in the second container 3.

A supply line 34 for supplying makeup water may be connected to the supply water line 32 between the water supply tank 31 and the water supply pump 33. A supply pump 35 is provided on the supply line 34. In addition, the supply water line 32 can be provided with at least one heat exchanger for heating water flowing through the supply water line 32. As such at least one heat exchanger, in Embodiment 1, a first heater 36 which heats water by heat exchange between a gas and water flowing through the extraction line 15, and a second heater 37 which heats water by heat exchange between a fluid and water flowing through the heating fluid line 20 are provided. Accordingly, the extraction line 15 extends to pass through the first heater 36, and the heating fluid line 20 extends to pass through the second heater 37.

One end of an outflow gas line 41 is connected to the upper portion, preferably, the top portion of the second container 3. The other end of the outflow gas line 41 is connected to a storage tank 40 for storing a gas flowing through the outflow gas line 41 and a gas having oxygen as a main component as in an operation which will be described later. The outflow gas line 41 may be configured to pass through the water supply tank 31. In addition, the outflow gas line 41 may be provided with a dust collection device 42 (Cyclone, a bag filter, or the like) which removes a solid component from the gas flowing out from the second container 3. In order to return the solid component removed in the dust collection device 42 to the supply port 3a, a collection line 43 for communicating the dust collection device 42 and the supply port 3a may be provided.

### <Operation of hydrogen production system according to Embodiment 1 of present disclosure>

Next, an operation of the hydrogen production system 1 according to Embodiment 1 of the present disclosure will be described. The hydrogen compound member 4 in a state where hydrogen is stored is accommodated in the first container 2. When the compressor 12 is started, a gas flows out from the first container 2, the gas flows through the gas circulation line 11, and the gas circulates so as to flow into the first container 2 again. When a fluid which has absorbed the heat generated by the heat generation source 19 or a fluid heated by the heat generated by the heat generation source 19 flows through the heating fluid line 20, this fluid and the gas flowing through the gas circulation line 11 exchange heat in the third heat exchanger 13, thereby heating the latter gas. A flow rate of the fluid supplied to the third heat exchanger 13 is adjusted so that a temperature of the gas reaches about 150°C to about 300°C.

When the gas is heated in the third heat exchanger 13, the heated gas flows into the first container 2, so that the hydrogen compound member 4 accommodated in the first container 2 is heated. When a temperature of the hydrogen compound member 4 is in a range of about 150°C to about 300°C, hydrogen is released from the hydrogen compound member 4. Due to the release of hydrogen from the hydrogen compound member 4, a hydrogen concentration in the gas flowing out from the first container 2, that is, the gas flowing through the gas circulation line 11, increases, and eventually, the gas containing hydrogen as a main component circulates. When the gas having hydrogen as the main component circulates, some of the circulating gas is supplied to the storage tank 16 through the extraction line 15, thereby storing the gas having hydrogen as the main component in the storage tank 16.

When the gas is configured to pass from the lower side to the upper side of the hydrogen compound member 4 in the first container 2, the hydrogen compound member 4 can configure a fluidized bed due to the flow of the gas. Then, there is a risk that the particles constituting the hydrogen compound member 4 rub against each other to generate dust or the like. If the dust is accompanied by the gas and flows out of the first container 2 to reach the compressor 12, it may cause a failure of the compressor 12. If the dust collection device 17 is provided in the gas circulation line 11 between the compressor 12 and the first container 2, dust or the like is removed by the dust collection device 17, and thus a risk of failure of the compressor 12 can be reduced. The dust or the like collected by the dust collection device 17 may be discarded. However, since the dust or the like may contain a component containing a two-dimensional arrangement of the hydrogen compound, the dust or the like may be returned to the supply port 2a through the collection line 18 and supplied into the first container 2 again to be reused.

The hydrogen compound member 4 which has released hydrogen in the first container 2 flows out from the first container 2 through the outflow port 2b and is supplied into the second container 3 through the first path 5. When the hydrogen compound member 4 passes through the first path 5, the hydrogen compound member 4 is cooled by exchanging heat with the heat medium in the first heat exchanger 7. In the first heat exchanger 7, a flow rate of the heat medium in the first heat exchanger 7 is adjusted so that the temperature of the hydrogen compound member 4 is lower than about 150°C, preferably about 80°C or higher and lower than about 150°C. When the hydrogen compound member 4 in such a temperature range is supplied into the second container 3, an internal temperature of the second container 3 is lower than an internal temperature of the first container 2.

The water supply device 30 supplies water into the second container 3 in a state where the temperature of the inside of the second container 3 is lower than about 150°C, preferably about 80°C or higher and lower than about 150°C, and the hydrogen compound member 4 is accommodated in the second container 3. Specifically, by starting the water supply pump 33, water at an appropriate temperature (lower than about 150°C, preferably about 80°C or higher and lower than about 150°C) is supplied from the water supply tank 31 into the second container 3 through the supply water line 32. If the first heater 36 and the second heater 37 are provided, water is heated in the first heater 36 and the second heater 37 while flowing through the supply water line 32. In this case, the energy consumption for heating the water in the water supply tank 31 is suppressed, and the heat of the gas flowing through the extraction line 15 and the fluid flowing through the heating fluid line 20 can be effectively used. Therefore, it is possible to improve thermal efficiency of the overall hydrogen production system 1. By appropriately starting the supply pump 35 according to the amount of water in the water supply tank 31, the makeup water can be supplied to the supply water line 32 through the supply line 34.

When water is supplied into the second container 3, the water is decomposed into hydrogen and oxygen in the presence of the hydrogen compound member 4, and hydrogen is absorbed in the hydrogen compound member 4. Accordingly, the hydrogen compound member 4 is in a state of storing hydrogen. Oxygen flows out from the second container 3, flows through the outflow gas line 41, is supplied to the storage tank 40, and is stored.

As long as the dust collection device 42 is provided in the outflow gas line 41, the dust or the like is removed by the dust collection device 42, and accordingly, the dust or the like flowing into the storage tank 40 can be reduced. The handling of the dust or the like collected by the dust collection device 42 is the same as that of the dust collection device 17. In addition, as long as the outflow gas line 41 is configured to pass through the water supply tank 31, water contained in the gas flowing through the outflow gas line 41 can be trapped in the water supply tank 31, thereby suppressing the water from being accumulated in the storage tank 40.

The hydrogen compound member 4 in a state where hydrogen is stored in the second container 3 flows out from the second container 3 through the outflow port 3b, and is supplied into the first container 2 through the second path 6. When the hydrogen compound member 4 passes through the second path 6, the hydrogen compound member 4 is heated by exchanging heat with the heat medium in the second heat exchanger 8. In the second heat exchanger 8, a flow rate of the heat medium in the second heat exchanger 8 is adjusted so that the temperature of the hydrogen compound member 4 is about 150°C to about 300°C.

As described above, in the hydrogen production system 1 according to Embodiment 1, after hydrogen is released from the hydrogen compound member 4 into the first container 2 having a high temperature, it is possible to move the hydrogen compound member 4 into the second container 3 having a low temperature, cause the hydrogen compound member 4 to store hydrogen, and move the hydrogen compound member 4 storing the hydrogen into the first container 2 again. By such an operation, only a temperature of the hydrogen compound member 4 needs to be raised or lowered, and temperature changes of the first container 2 and the second container 3 accommodating the hydrogen compound member 4 can be suppressed as much as possible. Accordingly, it is possible to improve thermal efficiency, and as a result, it is possible to reduce production cost of hydrogen. In addition, if a replacement unit 38 for extracting the hydrogen compound member 4 moving through the first path 5 or the second path 6 and supplying a new hydrogen compound member 4 to the first path 5 and the second path 6, that is, for exchanging the hydrogen compound member 4 is provided on at least one of the first path 5 or the second path 6, when the hydrogen compound member 4 moves between the first container 2 and the second container 3, it is possible to easily perform the exchange of the hydrogen compound member 4 by extracting the hydrogen compound member 4 from the hydrogen production system 1 and supplying the new hydrogen compound member 4 to the hydrogen production system 1. The replacement unit 38 may be provided at any position on the first path 5 and the second path 6. In addition, the replacement unit 38 can be, for example, a pipe with an on/off valve, but is not limited to this configuration.

### <Modification example of hydrogen production system according to Embodiment 1 of present disclosure>

In the operation described above, the hydrogen compound member 4 sequentially flows into and out of the first container 2 and the second container 3 in a batch manner, but it is not limited to such an embodiment. The hydrogen production system 1 can also be operated so that the first container 2, the first path 15, the second container 3, and the second path 6 are filled with the hydrogen compound member 4, and the hydrogen compound member 4 circulates between the first container 2 and the second container 3. That is, the hydrogen compound member 4 can also be allowed to continuously flow into and flow out of the first container 2 and the second container 3. In such an embodiment, since the heat medium for exchanging heat with the hydrogen compound member 4 is made common in each of the first heat exchanger 7 and the second heat exchanger 8, the hydrogen compound member 4 moving from the second container 3 to the first container 2 can be heated by heat of the hydrogen compound member 4 moving from the first container 2 to the second container 3. Accordingly, it is possible to further improve the thermal efficiency, and as a result, it is possible to further reduce the production cost of hydrogen.

In addition, in a case where the hydrogen compound member 4 continuously flows into and flows out of the first container 2 and the second container 3, the insides of the first container 2 and the second container 3 are configured to have the labyrinth structures 2e and 3e. Accordingly, it is possible to ensure a residence time of the hydrogen compound member 4 in each container and more reliably perform the release of the hydrogen and storage of the hydrogen.

### <Configuration of heat generation source 19>

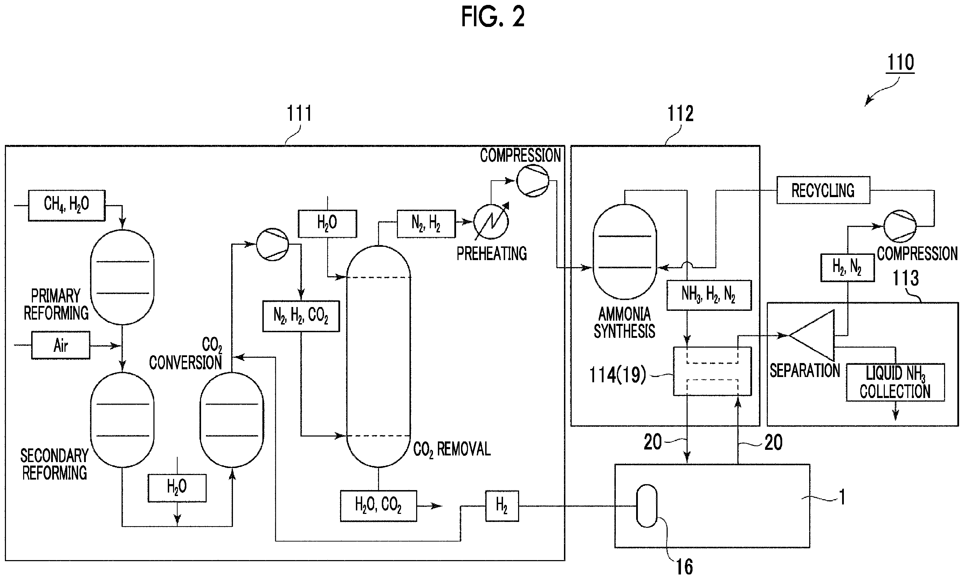

Fig. 2 shows a schematic configuration diagram of an ammonia production system 110 including the heat generation source 19. The ammonia production system 110 includes a raw material preparation unit 111, an ammonia synthesis unit 112, and an ammonia collection unit 113. The ammonia synthesis unit 112 includes a heat exchanger 114 which cools a mixed gas of an ammonia gas generated from hydrogen and nitrogen, and hydrogen and nitrogen which are residues of a raw material, before supplying the mixed gas to the ammonia collection unit 113. A fluid which has exchanged heat with the mixed gas in the heat exchanger 114 is supplied to the hydrogen production system 1 through the heating fluid line 20. In this embodiment, the heat exchanger 114 is a heat generation device as the heat generation source 19, and exhaust heat associated with an ammonia synthesis reaction is used to heat a gas in the third heat exchanger 13 (see Fig. 1) and heat water in the second heater 37 (see Fig. 1). In this embodiment, hydrogen stored in the storage tank 16 can be supplied to the raw material preparation unit 111 and used as a raw material for the ammonia synthesis.

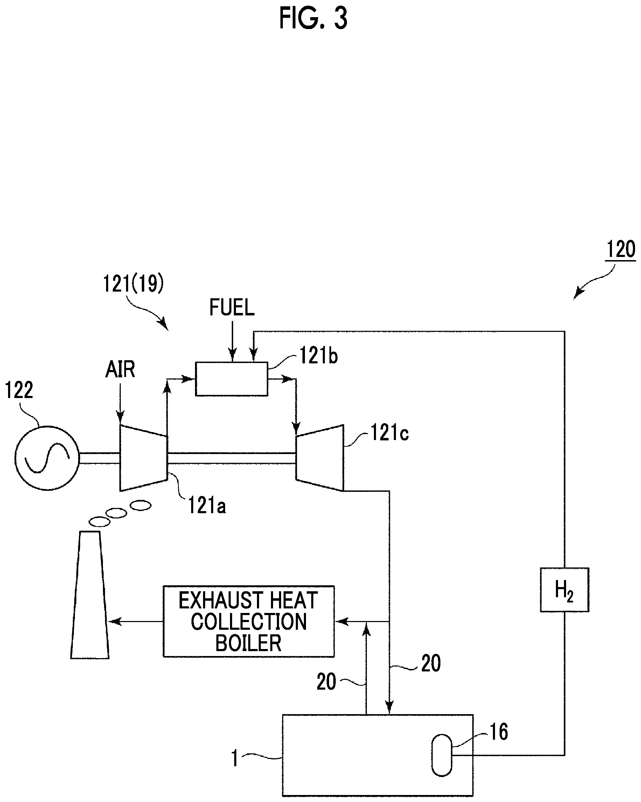

Fig. 3 shows a schematic configuration diagram of a power generation system 120 including the heat generation source 19. The power generation system 120 includes a gas turbine 121 and a generator 122. In the gas turbine 121, the air compressed by a compressor 121a is supplied to a combustor 121b to burn a fuel, and a turbine 121c is driven by a combustion gas generated by the combustion of the fuel. The generator 122 is driven by the turbine 121c to generate power. Some of an exhaust gas from the turbine 121c may be supplied to the hydrogen production system 1 through the heating fluid line 20, or a fluid heated by exchanging heat with the exhaust gas by a heat exchanger (not shown) may be supplied to the hydrogen production system 1 through the heating fluid line 20. In this embodiment, the gas turbine 121 is a heat generation device as the heat generation source 19, and exhaust heat of the gas turbine 121 is used to heat a gas in the third heat exchanger 13 (see Fig. 1) and heat water in the second heater 37 (see Fig. 1). In this embodiment, hydrogen stored in the storage tank 16 can also be used as the fuel or some thereof supplied to the combustor 121b.

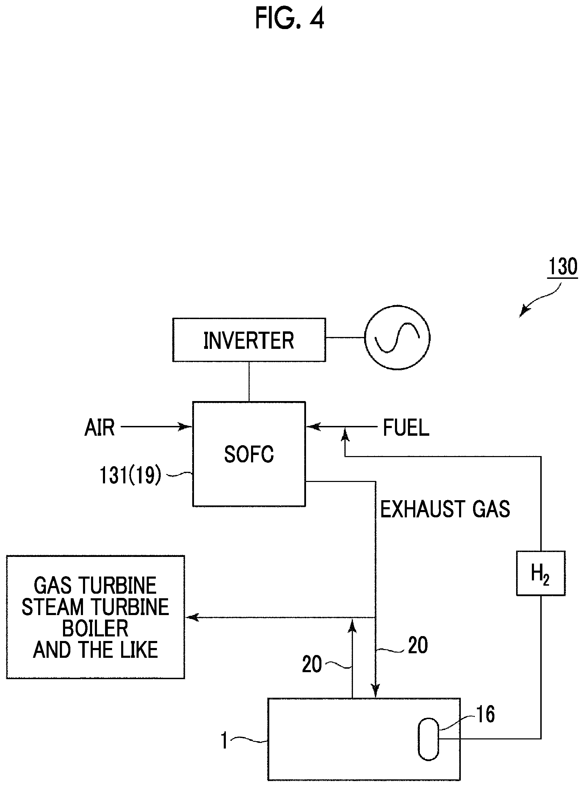

Fig. 4 shows a schematic configuration diagram of a fuel cell system 130 including the heat generation source 19. The fuel cell system 130 includes a solid oxide type fuel cell (SOFC) 131. In the fuel cell 131, power is generated by a reaction between the air and a fuel such as a city gas, and an exhaust gas after the reaction is generated. Since the exhaust gas includes reaction heat of this reaction, some of exhaust gas from the fuel cell 131 may be supplied to the hydrogen production system 1 through the heating fluid line 20, or a fluid heated by exchanging heat with the exhaust gas by a heat exchanger (not shown) may be supplied to the hydrogen production system 1 through the heating fluid line 20. In this embodiment, the fuel cell 131 is a heat generation device as the heat generation source 19, and reaction heat of the fuel cell 131 is used to heat a gas in the third heat exchanger 13 (see Fig. 1) and heat water in the second heater 37 (see Fig. 1). In this embodiment, hydrogen stored in the storage tank 16 can also be used as the fuel or some thereof supplied to the fuel cell 131.

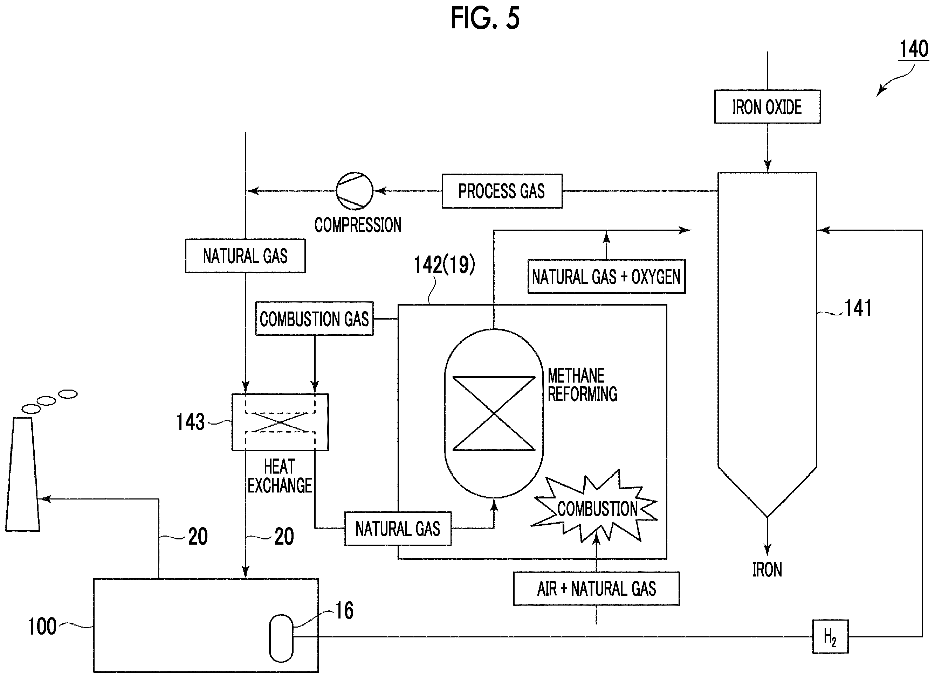

Fig. 5 shows a schematic configuration diagram of an iron production system 140 including the heat generation source 19. The iron production system 140 includes a furnace 141 for reducing iron oxide, a reforming device 142 for reforming a natural gas, and a heat exchanger 143. As heat to be supplied for a reforming reaction of the natural gas in the reforming device 142, heat generated by burning the natural gas is used. The heat exchanger 143 exchanges heat between the natural gas reformed in the reforming device 142 and the combustion gas of the natural gas. The combustion gas from the heat exchanger 143 is supplied to the hydrogen production system 1 through the heating fluid line 20. In this embodiment, the reforming device 142 is a heat generation device as the heat generation source 19, and a part of a combustion reaction of the natural gas to be used for the reforming of the natural gas is used to heat a gas in the third heat exchanger 13 (see Fig. 1) and heat water in the second heater 37 (see Fig. 1). In this embodiment, the hydrogen stored in the storage tank 16 can also be used for a reduction reaction of iron oxide (Fe₂O₃ + 3H₂ → 2Fe + 3H₂O) in the furnace 141.

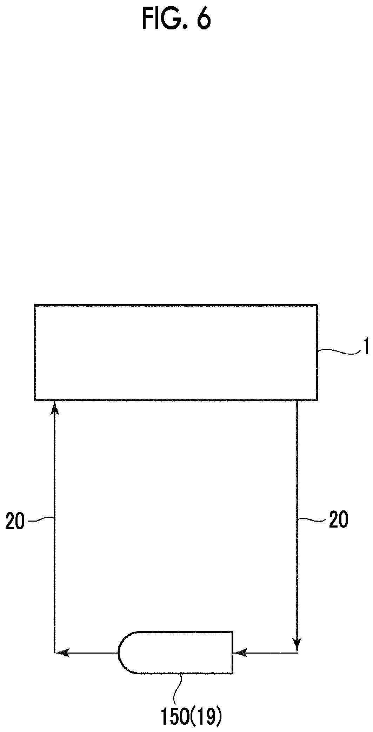

Fig. 6 shows a schematic configuration diagram of a sunlight focusing device 150 as the heat generation source 19. The sunlight focusing device 150 heats a fluid by focusing and emitting sunlight onto the fluid flowing through the heating fluid line 20. The configuration of the sunlight focusing device 150 is not particularly limited, and for example, any type of device such as a parabolic trough, a solar power generation tower, and a parabolic dish can be used, but in consideration of a maximum heating temperature, cost, and the like, parabolic trough type device is preferable. In this embodiment, the heat of sunlight is used to heat a gas in the third heat exchanger 13 (see Fig. 1) and heat water in the second heater 37 (see Fig. 1).

### (Embodiment 2)

Next, a hydrogen production system according to Embodiment 2 will be described. In the hydrogen production system according to Embodiment 2, the configurations of the first container 2 and the second container 3 are changed from those of Embodiment 1. In Embodiment 2, the same reference numerals are used for the same constituent elements of Embodiment 1 and the specific description is omitted.

### <Configuration of hydrogen production system according to Embodiment 2 of present disclosure>

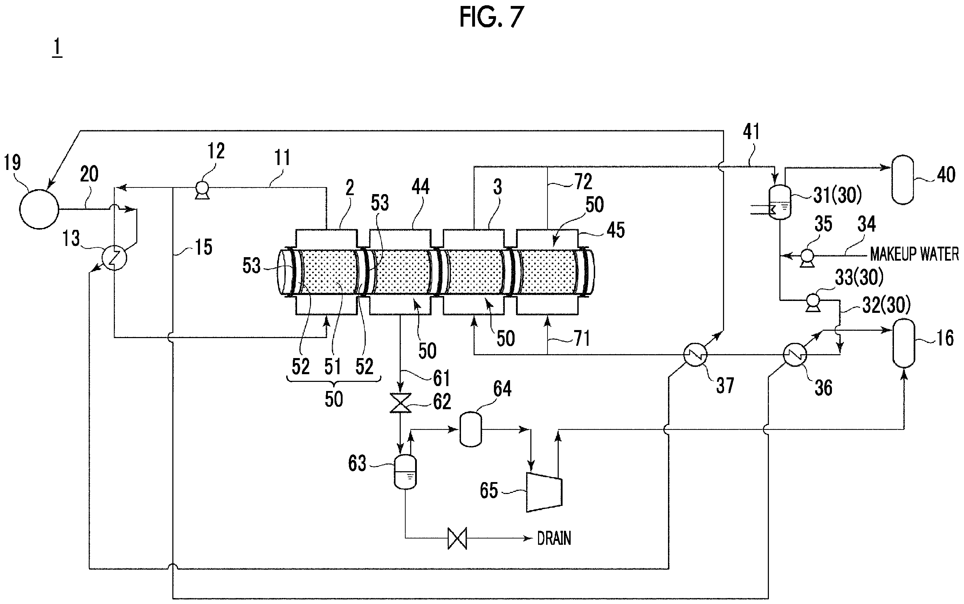

As shown in Fig. 7, the hydrogen production system 1 according to Embodiment 2 of the present disclosure includes a third container 44 and a fourth container 45, in addition to the first container 2 and the second container 3. The third container 44 is provided between the first container 2 and the second container 3, and the fourth container 45 is provided on a side opposite to the third container 44 with respect to the second container 3.

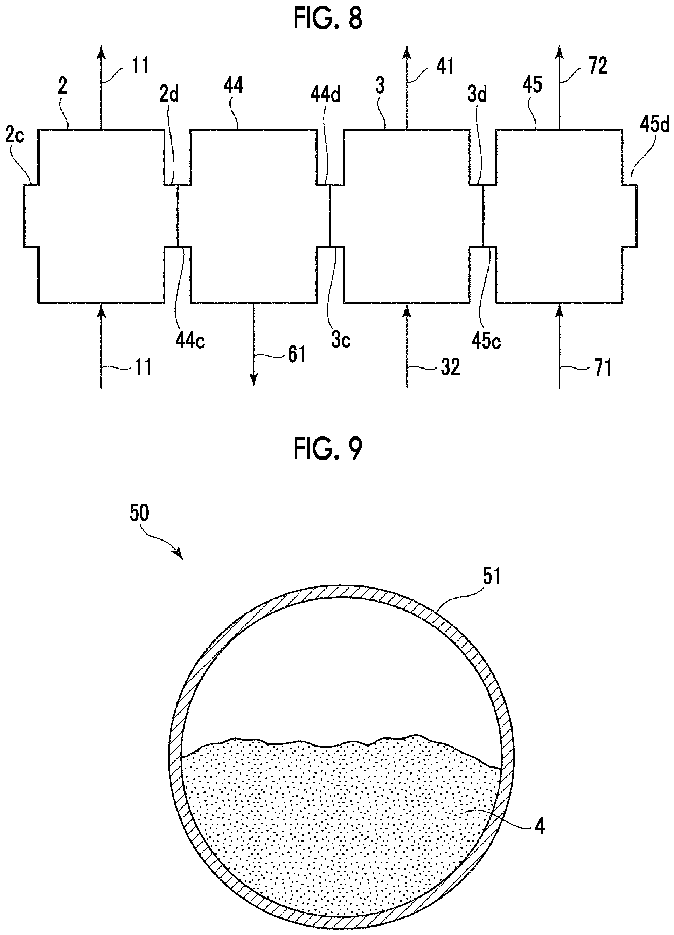

As shown in Fig. 8, the first container 2 includes inlets 2c and 2d which are open at positions facing each other. In the same manner, the second container 3, the third container 44, and the fourth container 45 also include inlets 3c, 44c, and 45c and outlets 3d, 44d, and 45d, respectively, which are open at positions facing each other. The outlet 2d of the first container 2 and the inlet 44c of the third container 44 are connected to each other, the outlet 44d of the third container 44 and the inlet 3c of the second container 3 are connected to each other, and the outlet 3d of the second container 3 and the inlet 45c of the fourth container 45 are connected to each other. Although not shown in either Figs. 7 or 8, the outlet 45d of the fourth container 45 is configured to communicate with the inlet 2c of the first container 2 through a path (not shown).

As shown in Fig. 7, the hydrogen production system 1 according to Embodiment 2 uses a cartridge 50 which accommodates the hydrogen compound member 4 (see Fig. 9) . The cartridge 50 includes a porous tubular member 51, and two lids 52 and 52 which close both open ends of the tubular member 51. A seal member 53, such as an O-ring, is provided on an outer peripheral surface of each of the lids 52 and 52. The cartridge 50 can be installed in the first container 2 so that each of the lids 52 and 52 of the cartridge 50 fits the inlet 2c and the outlet 2d of the first container 2 (see Fig. 8) and the tubular member 51 is positioned in the inside of the first container 2. Each lid 52 and each of the inlet 2c and the outlet 2d are sealed by the seal member 53. The cartridge 50 can be installed in the same manner in each of the second container 3, the third container 44, and the fourth container 45.

As shown in Fig. 9, the hydrogen compound member 4 is accommodated in the inside of the tubular member 51. A size of holes formed in the tubular member 51 is smaller than a particle size of the hydrogen compound member 4 so that the hydrogen compound member 4 does not flow out from the holes formed in the tubular member 51. Since the hydrogen compound member 4 is accommodated in the tubular member 51, the cartridge 50 is installed in each of the first container 2, the second container 3, the third container 44, and the fourth container 45 as shown in Fig. 7, and accordingly, the hydrogen compound member 4 is accommodated in each of the first container 2, the second container 3, the third container 44, and the fourth container 45.

As shown in Fig. 7, a first purge line 61 is connected to the third container 44. The first purge line 61 is connected to the storage tank 16. The first purge line 61 is provided with an on/off valve 62, a tank 63 storing water, a surge tank 64, and a vacuum pump 65 sequentially in a direction from the third container 44 toward the storage tank 16. A branch line 71 branched from the supply water line 32 and a second purge line 72 connected to the outflow gas line 41 are connected to the fourth container 45. Other configurations are the same as those in Embodiment 1.

### <Operation of hydrogen production system according to Embodiment 2 of present disclosure>

Next, an operation of the hydrogen production system 1 according to Embodiment 2 of the present disclosure will be described with reference to Fig. 7. The cartridge 50 accommodating the hydrogen compound member 4 in a state of storing hydrogen is installed in the first container 2. In the same operation as in Embodiment 1, when a gas heated by the third heat exchanger 13 flows into the first container 2, since the tubular member 51 of the cartridge 50 installed in the first container 2 is porous, the heated gas flows into the tubular member 51 and the hydrogen compound member 4 is heated. Accordingly, hydrogen is released from the hydrogen compound member 4, and in the same operation as in Embodiment 1, the gas containing hydrogen as a main component is stored in the storage tank 16.

After the release of hydrogen is completed in the first container 2, the cartridge 50 installed in the first container 2 is moved to the third container 44 and installed in the third container 44. At the same time as this operation, another cartridge 50 accommodating the hydrogen compound member 4 in a state of storing hydrogen can be installed in the first container 2, and the release of hydrogen can be continued in the first container 2 in the operation described above.

After the cartridge 50 is installed in the third container 44, the on/off valve 62 is opened and the vacuum pump 65 is started to cause the gas in the third container 44 to flow out from the third container 44. Since the tubular member 51 of the cartridge 50 is porous, the gas in the cartridge 50, mainly hydrogen, also flows out from the tubular member 51 and flows out from the third container 44. A temperature of the gas in the cartridge 50 immediately after being moved from the first container 2 is about 150°C to about 300°C, and a temperature of the inside of the cartridge 50, that is, the hydrogen compound member 4 decreases by causing the gas in the cartridge 50 to flow out. The hydrogen compound member 4 is preferably cooled to a temperature of lower than about 150°C, preferably about 80°C or higher and lower than about 150°C. The gas, mainly hydrogen, which has flowed out from the third container 44 flows through the first purge line 61 and is supplied to the storage tank 16. Moisture contained in the gas is trapped in the tank 63 while flowing through the first purge line 61. In addition, in a case where the amount of gas flowing through the first purge line 61 rapidly increases, such as immediately after the start of the vacuum pump 65, the gas flow can be regulated in the surge tank 64.

Next, the cartridge 50 installed in the third container 44 is moved to the second container 3 and installed in the second container 3. At the same time as this operation, the cartridge 50 installed in the first container 2 is moved to the third container 44 and installed in the third container 44, and the gas in the cartridge 50 can be removed in the operation described above. In addition, another cartridge 50 accommodating the hydrogen compound member 4 in a state of storing hydrogen can be installed in the first container 2, and the release of hydrogen can be continued in the first container 2 in the operation described above.

After the cartridge 50 is installed in the second container 3, when the water supply device 30 supplies water at an appropriate temperature into the second container 3, the water flows into the cartridge 50 installed in the second container 3. Accordingly, hydrogen is absorbed in the hydrogen compound member 4 according to the principle described in Embodiment 1, and the hydrogen compound member 4 stores the hydrogen. In the cartridge 50 installed in the second container 3, since the hydrogen is removed in the third container 44, introduction of the hydrogen into the second container 3 due to the cartridge 50 is suppressed. If a reaction of water decomposed into hydrogen and oxygen occurs in a state where hydrogen is introduced into the second container 3, there is a risk of explosion due to a reaction between oxygen and hydrogen in the second container 3, but such a risk can be reduced. The oxygen generated when the hydrogen is absorbed by the hydrogen compound member 4 flows out from the second container 3 and is then stored in the storage tank 40 in the same operation as in Embodiment 1.

Next, the cartridge 50 installed in the second container 3 is moved to the fourth container 45 and installed in the fourth container 45. At the same time as this operation, the cartridge 50 installed in the third container 44 is moved to the second container 3 and installed to the second container 3, and the cartridge 50 installed in the first container 2 is moved to the third container 44 and installed in the third container 44. In the operation described above, the hydrogen can be absorbed by the hydrogen compound member 4 in the cartridge 50 installed in the second container 3, and the gas in the cartridge 50 installed in the third container 44 can be removed. In addition, another cartridge 50 accommodating the hydrogen compound member 4 in a state of storing hydrogen can be installed in the first container 2, and the release of hydrogen can be continued in the first container 2 in the operation described above.

After the cartridge 50 is installed in the fourth container 45, some of the water flowing through the supply water line 32 is caused to flow into the fourth container 45 through the branch line 71. The water supplied to the second container 3 may be liquid water, steam, or a fluid including at least one of liquid water or steam, but in a case where the fourth container 45 is provided, water in the form of steam (steam) is preferable. When the steam flows into the fourth container 45, the steam flows into the inside of the cartridge 50 installed in the fourth container 45, so that the gas in the cartridge 50, mainly oxygen, flows out from the cartridge 50. The oxygen flowing out from the cartridge 50 flows out from the fourth container 45 together with steam, flows into the outflow gas line 41 through the second purge line 72, and is stored in the storage tank 40 in the same operation as in Embodiment 1 together with oxygen from the second container 3.

When the cartridge 50 installed in the fourth container 45 is moved to the first container 2 again and installed in the first container 2, the hydrogen can be released again in the operation described above. In addition, at the same time, the cartridge 50 installed in each of the second container 3, the third container 44, and the first container 2 is moved to be installed in each of the fourth container 45, the second container 3, and the third container 44, and each operation described above can be continued. In the cartridge 50 installed in the first container 2 again, since the oxygen is removed from the inside of the cartridge 50 in the fourth container 45, introduction of the oxygen into the first container 2 due to the cartridge 50 is suppressed. If the oxygen is released in a state where the hydrogen is introduced into the first container 2, there is a risk of explosion due to a reaction between oxygen and hydrogen in the first container 2, but such a risk can be reduced.

As described above, in the hydrogen production system 1 according to Embodiment 2, by moving the cartridge 50, the hydrogen compound member 4 can be moved between the first container 2 and the third container 44, between the third container 44 and the second container 3, between the second container 3 and the fourth container 45, and between the fourth container 45 and the first container 2, respectively, and the movement of the hydrogen compound member 4 can be easily performed. In addition, since the hydrogen compound member 4 can be exchanged by exchanging the cartridge 50, the hydrogen compound member 4 can be easily exchanged.

### <Modification example of hydrogen production system according to Embodiment 2 of present disclosure>

In Embodiment 2, the hydrogen production system 1 includes the third container 44 and the fourth container 45, in addition to the first container 2 and the second container 3, but is not limited to this embodiment. The hydrogen production system 1 may include only the first container 2 and the second container 3, may include the third container 44 in addition to the first container 2 and the second container 3, or may include the fourth container 45 in addition to the first container 2 and the second container 3. However, by providing the third container 44 and the fourth container 45, as described above, the risk of explosion due to the reaction between hydrogen and oxygen can be reduced.

In Embodiment 2, it is configured to communicate the outlet 45d of the fourth container 45 and the inlet 2c of the first container 2 through a path (not shown), but is not limited to this embodiment. In addition to a container group composed of the first container 2, the third container 44, the second container 3, and the fourth container 45, another container group having the same configuration is provided, the outlet 45d of the fourth container 45 in the one container group and the inlet 2c of the first container 2 in the other container group may be configured to communicate with each other. The number of container groups is not limited to two, and three or more container groups may also be provided.

For example, the contents described in each embodiment are understood as follows.

[1] A hydrogen production system according to one aspect including
   a hydrogen compound member (4),
   a first container (2),
   a second container (3) having an internal temperature which is lower than an internal temperature of the first container (1), and
   a water supply device (30) which supplies water into the second container (3),
   in which the hydrogen compound member (4) accommodated in the first container (2) is movable into the second container (3), and the hydrogen compound member (4) accommodated in the second container (3) is movable into the first container (2).

According to the hydrogen production system of the present disclosure, after hydrogen is released from the hydrogen compound member into the first container having a high temperature, it is possible to move the hydrogen compound member into the second container having a low temperature, cause the hydrogen compound member to store hydrogen, and move the hydrogen compound member storing the hydrogen into the first container again. By such an operation, only a temperature of the hydrogen compound member needs to be raised or lowered, and temperature changes of the first container and the second container accommodating the hydrogen compound member can be suppressed as much as possible. Accordingly, it is possible to improve thermal efficiency, and as a result, it is possible to reduce production cost of hydrogen.

[2] The hydrogen production system of another aspect according to [1], further including
a first path (5) through which the hydrogen compound member (4) moves from the first container (2) to the second container (3),
a second path (6) through which the hydrogen compound member (4) moves from the second container (3) to the first container (2),
a first heat exchanger (7) which cools the hydrogen compound member (4) moving through the first path (5),
a second heat exchanger (8) which heats the hydrogen compound member (4) moving through the second path (6), and
a circulation line (9) in which a heat medium which exchanges heat with the hydrogen compound member (4) in the first heat exchanger (7) and the second heat exchanger (8) circulates between the first heat exchanger (7) and the second heat exchanger (8).

According to such a configuration, the hydrogen compound member moving from the second container to the first container can be heated by the heat of the hydrogen compound member moving from the first container to the second container, so that thermal efficiency can be further improved, and as a result, the production cost of hydrogen can be further reduced.

[3] The hydrogen production system of still another aspect according to [2],
in which a replacement unit (38) for extracting the hydrogen compound member (4) moving through the first path (5) or the second path (6) and for supplying a new hydrogen compound member (4) different from the extracted hydrogen compound member (4) to the first path (5) or the second path (6) is provided in at least one of the first path (5) or the second path (6).

According to such a configuration, when the hydrogen compound member moves between the first container and the second container, the hydrogen compound member is extracted from the hydrogen production system and the new hydrogen compound member is supplied to the hydrogen production system, thereby easily exchanging the hydrogen compound member.

[4] The hydrogen production system of still another aspect according to any one of [1] to [3],
in which an inside of one or both of the first container (2) and the second container (3) is configured to have a labyrinth structure (2e, 3e).

According to such a configuration, it is possible to ensure a residence time of the hydrogen compound member in the inside of one or both of the first container and the second container, and it is possible to more reliably release and store hydrogen.

[5] The hydrogen production system of still another aspect according to any one of [1] to [4], further including
a gas circulation line (11) through which a gas circulates so that the gas in the first container (2) flows out from the first container (2) and flows into the first container (2) again, and
a dust collection device (17) which is provided in the gas circulation line (11), and removes a solid component from the gas which flows through the gas circulation line (11) .

When the gas is configured to pass from the lower side to the upper side of the hydrogen compound member in the first container, the hydrogen compound member can configure a fluidized bed due to the flow of the gas. Then, there is a risk that the particles constituting the hydrogen compound member rub against each other to generate dust or the like. If the dust is accompanied by the gas and flows out from the first container, when a compressor for pressurizing the gas is provided, the dust reaches the compressor, which may cause a failure of the compressor. On the other hand, if the dust collection device is provided in the gas circulation line between the compressor and the first container, dust or the like is removed by the dust collection device, and thus a risk of failure of the compressor can be reduced.

[6] The hydrogen production system of still another aspect according to [5], further including
a collection line (18) which supplies the solid component removed by the dust collection device (17) to the hydrogen compound member (4) moving from the second container (3) to the first container (2).

Since there is a possibility that the dust or the like removed by the dust collection device contains a component having a two-dimensional arrangement of a hydrogen compound, the dust or the like is supplied to the hydrogen compound member moving from the second container to the first container through the collection line, thereby reusing in the first container.

[7] The hydrogen production system of still another aspect according to [1],
in which the hydrogen compound member (4) is accommodated in a cartridge (50) having both ends of a porous tubular member (51) closed with lids (52),
the first container (2) and the second container (3) include inlets (2c/3c) and outlets (2d/3d),
as the cartridge (50) is installed in the first container (2) so that each of the lids (52) of the cartridge 50 fits each of the inlet (2c) and the outlet (2d) of the first container (2) and the tubular member (51) is positioned in an inside of the first container (2), the hydrogen compound member (4) can be accommodated in the first container (2),
as the cartridge (50) is installed in the second container (3) so that each of the lids (52) of the cartridge (50) fits each of the inlet (3c) and the outlet (3d) of the second container (3) and the tubular member (51) is positioned in an inside of the second container (3), the hydrogen compound member (4) can be accommodated in the second container (3), and
the cartridge (50) installed in the first container (2) is movable to be installed in the second container (3), and the cartridge (50) installed in the second container (3) is movable to be installed in the first container (2).

According to such a configuration, the hydrogen compound member can be moved between the first container and the second container by moving the cartridge, and therefore, it is possible to easily move the hydrogen compound member between the first container and the second container. In addition, since the hydrogen compound member can be exchanged by exchanging the cartridge, the hydrogen compound member can be easily exchanged.

[8] The hydrogen production system of still another aspect according to [7],
in which a third container (44) including an inlet (44c) and an outlet (44d) is provided between the first container (2) and the second container (3),
as the cartridge (50) is installed in the third container (44) so that each of the lids (52) of the cartridge 50 fits each of the inlet (44c) and the outlet (44d) of the third container (44) and the tubular member (51) is positioned in an inside of the third container (44), the hydrogen compound member (4) can be accommodated in the third container (44),
the cartridge (50) installed in the first container (2) is movable to be installed in the third container (44), and the cartridge (50) installed in the third container (44) is movable to be installed in the second container (3), and
the hydrogen production system (1) includes a first purge line (61) in which a gas in the third container (44) is purged.

According to such a configuration, before moving the hydrogen compound member to the second container, hydrogen remaining in the cartridge can be purged in the third container, and accordingly, hydrogen flowing into the second container can be suppressed. As a result, it is possible to reduce a risk of explosion due to a reaction between oxygen and hydrogen in the second container.

[9] The hydrogen production system of still another aspect according to [7] or [8],
in which a fourth container (45) including an inlet (45c) and an outlet (45d) is provided between the second container (3) and the first container (2),
as the cartridge (50) is installed in the fourth container (45) so that each of the lids (52) of the cartridge 50 fits each of the inlet (45c) and the outlet (45d) of the fourth container (45) and the tubular member (51) is positioned in an inside of the fourth container (45), the hydrogen compound member (4) can be accommodated in the fourth container (45),
the cartridge (50) installed in the second container (3) is movable to be installed in the fourth container (45), and the cartridge (50) installed in the fourth container (45) is movable to be installed in the first container (2), and
the hydrogen production system (1) includes a second purge line (72) in which a gas in the fourth container (45) is purged.

According to such a configuration, before moving the hydrogen compound member to the first container, oxygen remaining in the cartridge can be purged in the fourth container, and accordingly, oxygen flowing into the first container can be suppressed. As a result, it is possible to reduce a risk of explosion due to a reaction between oxygen and hydrogen in the first container.

[10] The hydrogen production system of still another aspect according to any one of [1] to [9], further including
a gas circulation line (11) through which a gas circulates so that the gas in the first container (2) flows out from the first container (2) and flows into the first container (2) again,
an extraction line (15) for extracting some of the gas which circulates through the gas circulation line (11), and
a first heater (36) which heats the water by exchanging heat between the gas which flows through the extraction line (15) and the water supplied to the second container (3) by the water supply device (30).

According to such a configuration, the water supplied to the second container can be heated by effectively using the heat of the gas flowing through the extraction line, and accordingly, it is possible to improve thermal efficiency of the overall hydrogen production system.

[11] The hydrogen production system of still another aspect according to any one of [1] to [10], further including
a gas circulation line (11) through which a gas circulates so that the gas in the first container (2) flows out from the first container (2) and flows into the first container (2) again,
a heat generation device (a heat generation source 19), and
a third heat exchanger (13) which exchanges heat between the gas which circulates through the gas circulation line (11) and a fluid which has absorbed heat generated by the heat generation device (19).

According to such a configuration, the hydrogen compound member can be heated by the heat generated by the heat generation device, so that thermal efficiency can be further improved, and as a result, the production cost of hydrogen can be further reduced.

[12] The hydrogen production system of still another aspect according to [11], further including
a second heater (37) which heats the water by exchanging heat between the fluid that has exchanged heat with the gas in the third heat exchanger (13), and the water supplied to the second container (3) by the water supply device (30).

According to such a configuration, the water supplied to the second container can be heated by effectively using the heat of the fluid which has exchanged heat with the gas in the third heat exchanger, and accordingly, it is possible to improve thermal efficiency of the overall hydrogen production system.

[13] The hydrogen production system of still another aspect according to any one of [1] to [10], further including
a gas circulation line (11) through which a gas circulates so that the gas flowing into the first container (2) flows out from the first container (2) and flows into the first container (2) again,
a sunlight focusing device (150) which focuses sunlight, and
a third heat exchanger (13) which exchanges heat between the gas which circulates through the gas circulation line (11) and a fluid heated by emitting the sunlight focused by the sunlight focusing device (150).

According to such a configuration, the hydrogen compound member can be heated by the heat of the sunlight, so that thermal efficiency can be further improved, and as a result, the production cost of hydrogen can be further reduced.

### Reference Signs List

1 Hydrogen production system
2 First container
2c Inlet (of first container)
2d Outlet (of first container)
2e Labyrinth structure
3 Second container
3c Inlet (of second container)
3d Outlet (of second container)
3e Labyrinth structure
4 Hydrogen compound member
5 First path
6 Second path
7 First heat exchanger
8 Second heat exchanger
9 Circulation line
11 Gas circulation line
13 Third heat exchanger
15 Extraction line
17 Dust collection device
18 Collection line
19 Heat generation source (heat generation device)
30 Water supply device
36 First heater
37 Second heater
38 Replacement unit
44 Third container
44c Inlet (of third container)
44d Outlet (of third container)
45 Fourth container
45c Inlet (of fourth container)
45d Outlet (of fourth container)
50 Cartridge
51 Tubular member
52 Lid
61 First purge line
72 Second purge line
150 Sunlight focusing device

## Claims

1. A hydrogen production system comprising:
a hydrogen compound member;
a first container;
a second container having an internal temperature which is lower than an internal temperature of the first container; and
a water supply device which supplies water into the second container,
wherein the hydrogen compound member accommodated in the first container is movable into the second container, and the hydrogen compound member accommodated in the second container is movable into the first container.

2. The hydrogen production system according to claim 1, further comprising:
a first path through which the hydrogen compound member moves from the first container to the second container;
a second path through which the hydrogen compound member moves from the second container to the first container;
a first heat exchanger which cools the hydrogen compound member moving through the first path;
a second heat exchanger which heats the hydrogen compound member moving through the second path; and
a circulation line in which a heat medium which exchanges heat with the hydrogen compound member in the first heat exchanger and the second heat exchanger circulates between the first heat exchanger and the second heat exchanger.

3. The hydrogen production system according to claim 2,
wherein a replacement unit for extracting the hydrogen compound member moving through the first path or the second path and for supplying a new hydrogen compound member different from the extracted hydrogen compound member to the first path or the second path is provided in at least one of the first path or the second path.

4. The hydrogen production system according to any one of claims 1 to 3,
wherein an inside of one or both of the first container and the second container is configured to have a labyrinth structure.

5. The hydrogen production system according to any one of claims 1 to 3, further comprising:
a gas circulation line through which a gas circulates so that the gas in the first container flows out from the first container and flows into the first container again; and
a dust collection device which is provided in the gas circulation line, and removes a solid component from the gas which flows through the gas circulation line.

6. The hydrogen production system according to claim 5, further comprising:
a collection line which supplies the solid component removed by the dust collection device to the hydrogen compound member moving from the second container to the first container.

7. The hydrogen production system according to claim 1,
wherein the hydrogen compound member is accommodated in a cartridge having both ends of a porous tubular member closed with lids,
the first container and the second container include inlets and outlets,
as the cartridge is installed in the first container so that each of the lids of the cartridge fits each of the inlet and the outlet of the first container and the tubular member is positioned in an inside of the first container, the hydrogen compound member can be accommodated in the first container,
as the cartridge is installed in the second container so that each of the lids of the cartridge fits each of the inlet and the outlet of the second container and the tubular member is positioned in an inside of the second container, the hydrogen compound member can be accommodated in the second container, and
the cartridge installed in the first container is movable to be installed in the second container, and the cartridge installed in the second container is movable to be installed in the first container.

8. The hydrogen production system according to claim 7,
wherein a third container including an inlet and an outlet is provided between the first container and the second container,
as the cartridge is installed in the third container so that each of the lids of the cartridge fits each of the inlet and the outlet of the third container and the tubular member is positioned in an inside of the third container, the hydrogen compound member can be accommodated in the third container,
the cartridge installed in the first container is movable to be installed in the third container, and the cartridge installed in the third container is movable to be installed in the second container, and
the hydrogen production system includes a first purge line in which a gas in the third container is purged.

9. The hydrogen production system according to claim 7 or 8,
a fourth container including an inlet and an outlet is provided between the second container and the first container,
as the cartridge is installed in the fourth container so that each of the lids of the cartridge fits each of the inlet and the outlet of the fourth container and the tubular member is positioned in an inside of the fourth container, the hydrogen compound member can be accommodated in the fourth container,
the cartridge installed in the second container is movable to be installed in the fourth container, and the cartridge installed in the fourth container is movable to be installed in the first container, and
the hydrogen production system includes a second purge line in which a gas in the fourth container is purged.

10. The hydrogen production system according to any one of claims 1 to 3, 7, and 8, further comprising:
a gas circulation line through which a gas circulates so that the gas in the first container flows out from the first container and flows into the first container again;
an extraction line for extracting some of the gas which circulates through the gas circulation line; and
a first heater which heats the water by exchanging heat between the gas which flows through the extraction line and the water supplied to the second container by the water supply device.

11. The hydrogen production system according to any one of claims 1 to 3, 7, and 8, further comprising:
a gas circulation line through which a gas circulates so that the gas in the first container flows out from the first container and flows into the first container again;
a heat generation device; and
a third heat exchanger which exchanges heat between the gas which circulates through the gas circulation line and a fluid which has absorbed heat generated by the heat generation device.

12. The hydrogen production system according to claim 11, further comprising:
a second heater which heats the water by exchanging heat between the fluid that has exchanged heat with the gas in the third heat exchanger, and the water supplied to the second container by the water supply device.

13. The hydrogen production system according to any one of claims 1 to 3, 7, and 8, further comprising:
a gas circulation line through which a gas circulates so that the gas flowing into the first container flows out from the first container and flows into the first container again;
a sunlight focusing device which focuses sunlight; and
a third heat exchanger which exchanges heat between the gas which circulates through the gas circulation line and a fluid heated by emitting the sunlight focused by the sunlight focusing device.
